# EUROPEAN PATENT SPECIFICATION

(11) **EP 1 453 925 B1**
(45) Date of publication and mention of the grant of the patent: **25.10.2006**
(21) Application number: 02702615.2
(22) Date of filing: 04.03.2002
(51) Int. Cl.: C09J 4/06, C09J 175/16, C08F 290/06

(54) **ELASTIC (METH)ACRYLIC ADHESIVE COMPOSITIONS**
ELASTISCHE (METH)ACRYL KLEBSTOFFE
COMPOSITIONS ADHESIVES (METH)ACRYLIQUES SOUPLES

(30) Priority: 08.03.2001 EP 01105351
(43) Date of publication of application: 08.09.2004
(73) Proprietor: Sika Technology AG, 6340 Baar (CH)
(72) Inventor: DE COOMAN, Ria, CH-8037 Zürich (CH); FLURY, René, DECEASED (CH); MEYER, Werner, R., CH-8702 Zollikon (CH)
(74) Representative: Sika Patent Attorneys
(86) International application number: PCT/IB2002/000649
(87) International publication number: WO 2002/070619

(56) References cited:
- EP-A- 0 835 917
- EP-A- 1 013 735
- WO-A-00/73397
- WO-A-00/77109
- WO-A-95/25760
- US-A- 4 439 600
- US-A- 5 710 235

## Description

### Cross References to Related Applications

This application claims the priority of European patent application No. 01 105 351.9, filed March 8, 2001, the disclosure of which is incorporated herein by reference in its entirety.

### Technical field

The present invention relates to elastic adhesive compositions.

### Background Art

The long term performance of bonding is dependent on the elastic behavior of the adhesive. The first-generation (meth)acrylic adhesives are brittle, with very low elongation at break. Many approaches are known to increase the flexibility of methacrylic adhesives.

One of said efforts to improve flexibility has led to the addition of solid non-reactive elastomers that are dissolved in the (meth)acrylic monomers. Such compositions are called rubber-toughened adhesive compositions. The elastomers are solids at room temperature, and commercially available as large particles or granulates.

This approach is described in several patent documents, such as: US 3,890,407, US 4,106,971, US 4,263,419, US 3,725,504, US 4,200,480, US 3,994,764, EP 0 641 846. The disadvantage of such formulations is that they can only be mixed homogeneously with special equipment like extruders or kneaders due to the high viscosity of the polymer that is formed in the monomer solution. Moreover, this type of compositions suffers from the limitation that the monomer, or the monomer mixture, must be chosen such that the non-reactive thermoplastic polymer is soluble therein. Practically, methyl methacrylate is the only monomer with high dissolving properties, and thus the only monomer that allows a polymer-in-monomer composition with up to 30% polymer content. Such low molar mass monomers, like methyl methacrylate, have a strong odor and are highly flammable. Polymer-in-monomer compositions resulting from this approach have a rubbery, stringy consistency and a high viscosity that makes their handling difficult. Due to the high viscosity of the mixture, only a limited amount of fillers can be used making the formulation expensive. A high viscosity is also limiting the adhesion of the formulation, as it limits the wetting of the substrate.

A further approach is the addition of *liquid, low- molar mass* elastomers that dissolve in the monomers. A number of patent documents describe such approach to increase the flexibility of the systems by adding liquid reactive elastomers to the reactive monomer (mixtures) to increase the flexility of the adhesives, namely US 4,769,419; US 4,331;765 and EP 0,561,352 disclosing mixtures of monomers and liquid rubber.

DE 2,610,423; US 4,439,600; EP 0,640,672; DE 2,319,637 and US 4 223 115 disclose mixtures of monomers and acrylic functionalised polyurethanes. In US 4,223,115 the composition optionally contains a dissolved elastomer, e.g. NBR (nitrile-butadiene-rubber), polychloroprene.

Flexibility is measured in terms of elongation at break. During deformation, however, all the above mentioned prior-art adhesives show a visco-elastic behavior with a significant viscous component. This means that during the deformation the binder matrix of the adhesive shows plastic flow and is being damaged. The visco-elastic behavior of the material is reflected in the shape of the stress-strain curve, measured at an elongation speed relevant to the practical application. The plot of the prior-art adhesives is not linear, and this even for the compositions of US 4,439,600 (see above) although elastic behavior is claimed. The plastic flow component during deformation reduces the number of deformation cycles an adhesive can perform before failing. This significantly reduces the life span of an adhesive bond under dynamic load.

It was therefore an object of the present invention to provide (meth)acrylic adhesive compositions with a high elasticity, measured in terms of elongation at break, and an elastic behavior approaching the ideal Hook law in the stress-strain diagram.

### Disclosure of the Invention

Thus one object of the present invention is an adhesive composition comprising
(a) at least one monofunctional (meth)acrylic monomer **A** whose homo-polymer or co-polymer exhibit a glass transition temperature (Tg) between 40°C and 140°C,
(b) at least one monofunctional (meth)acrylic monomer **B** of the following structure (B): 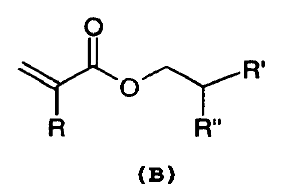 wherein
   R is H or CH₃,
   R' is H or (CH₂)ₙCH₃, with n = 0 to 2, in particular CH₂CH₃ or H, and
   R" is C₃-C₂₀-alkyl or phenoxy or O-(CH₂)ₙ₋CH₃, or O-[(CH₂)₂-O]ₙ-CH₂-CH₃ with n = 0 to 2, in particular (CH₂)ₙCH₃, wherein n is 3 or 10-13, and
c) at least one liquid elastomer C in the molecular weight range of 1000 to 9000 with (meth)acrylic derivative groups, preferably (meth)acrylic ester groups,
whereby the components A, B, and C are present in the following amounts:
B based on the total weight of A+B+C = 5 to 20 % by weight, preferably 5 to 12 % by weight,
C based on the total weight of A+C = 30 to 70 % by weight, preferably 40 to 60 % by weight.

Much preferred components of structure (B) are those wherein
R' is CH₂CH₃ and R" is (CH₂)₃CH₃ or
R' is H and R" is (CH₂)ₙCH₃ with n = 10-13.

### Brief Description of the Drawings

The invention will be better understood and objects other than those set forth above will become apparent when consideration is given to the following description thereof and the annexed Figures, wherein:
**Figure 1** shows a stress-strain diagram for the inventive composition of Example 1.
**Figure 2** shows a stress-strain diagram for the inventive composition of Example 2.
**Figure 3** shows a stress-strain diagram for the inventive composition of Example 3.
**Figure 4** shows a stress-strain diagram for the comparative composition of Example 4.

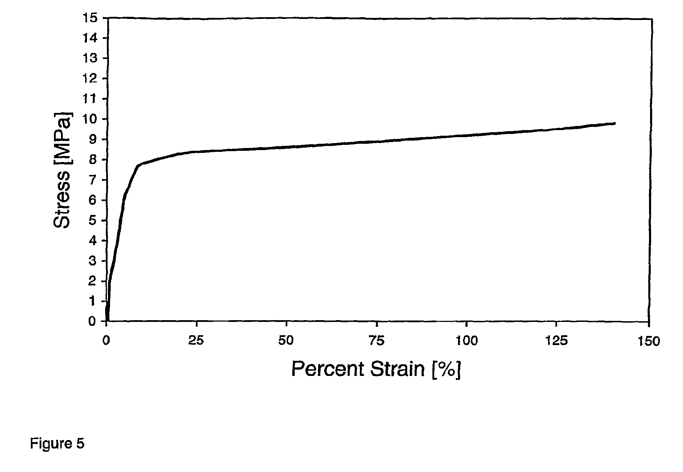

**Figure 5** shows a stress-strain diagram for the state of the art composition of Example 5.

### Modes for Carrying Out the Invention

In a preferred embodiments of the inventive adhesive composition, the monofunctional (meth)acrylic monomer A or mixture of (meth)acrylic monomers A whose homo-polymer or co-polymer exhibit a glass transition temperature (Tg) between 40°C and 140°C is a (meth)acrylate ester, preferably an alkyl ester with a linear or branched or cyclic C₁-C₆ alkyl, or a heterocyclic or aromatic ester, much preferred a (meth)acrylate ester selected from the group consisting of methyl methacrylate (MMA), tetrahydrofurfuryl methacrylate (THFMA), cyclohexylmethacrylate (CHMA), cyclic trimethylolpropane formal acrylate (CTFA), isobornylmethacrylate (IBMA), benzylmethacrylate (BMA), dicyclopentadienyloxyethylmethacrylate (DCPOEMA), t-butylmethacrylate (tBMA), isobornylacrylate (IBA), dihydrodicyclopentadienylacrylate (DHDCPA), and mixtures thereof.

In another preferred embodiment of the inventive composition, the monofunctional (meth)acrylic monomer B of formula (B) is a (meth)acrylic ester, such as an ester selected from the group consisting of linear and branched C₆-C₁₅-alkyl esters, in particular an acrylic ester such as lauryl acrylate, 2-ethyl hexyl acrylate, and mixtures thereof. Preferred (meth)acrylates lead to homopolymers and copolymers with a preferred Tg of <40°C.

In yet another preferred embodiment, the inventive adhesive composition contains a liquid elastomer C with ethylenically unsaturated groups which is chosen from the group consisting of
- (meth)acrylic functionalized butadiene, isoprene based polymer or block-copolymer,
- PU-(meth)acrylate obtainable through the syntheses of a polyethylene polyol or polypropylene polyol, a diisocyanate and a hydroxy functionalyzed ethylenically unsaturated monomer, whereby said PU (meth)acrylate is preferably obtainable through a synthesis using polyols with low unsaturation and narrow molecular weight distribution as obtainable through double metal cyanide complex catalysis (such polyols are e.g. known as Acclaim polyols).

The compositions of the present invention usually also comprise at least one initiator and/or catalyst, as well as preferably also at least one organic or inorganic filler or thixotropic agent. The compositions can also comprise further substances, such as stabilizers, additives, toughening agents, adhesion promotors, impact modifiers, core-shell polymers, defoaming agents, thickeners, plasticizers, wetting agents, wax compounds,cross-linking agents, inhibitors. Such additional substances are known to the skilled person. Examples for free radical initiators are organic peroxides, in particular benzoylperoxide, and examples for catalysts are tertiary amines and/or salts and/or complexes of transition metals. Examples for tertiary amines are e.g N,N-dimethylaniline, N,N-dimethyl-p-toluidine, N,N-diethylaniline, N,N-diethyltoluidine, N,N-bis(2-hydroxyethyl)-p-toluidine, N-ethoxylated p-toluidine, N-alkylmorpholine or mixtures thereof, and examples for the salts and complexes of transition metals are salts and complexes of cobalt, nickel and/or copper. Examples for inhibitors are hydrochinone, methylhydrochinone, t-butyl-p-cresol and for thixotropic agents e.g. Aerosil.

A further advantage of the compositions of the present invention is that they can be easily manufactured, namely by simply mixing monomer(s) A, monomer(s) B and liquid elastomer and an initiator and/or catalyst. Said mixture is preferably obtained at ambient temperature for a time sufficient to get a homogeneous liquid (usually about 10 to 20 minutes). Obtaining a homogeneous liquid, e.g. at 40°C, usually takes about 15 minutes. Then, preferably also present filler(s) are added and the composition is mixed at high revolutions per minute until the material shows thixotropic behavior.

The compositions of the present invention are especially suitable for binding applications, in particular bonding applications with materials having different thermal expansion coefficients as they are e.g. found in motor vehicles, e.g. trucks, and rail cars. Examples of such applications are bonding of side panels of trailers or direct glazing.

The ideal elastic behavior over a wide range of elongations obtained with the compositions of the present invention increases significantly the performance of the bond under dynamic load. Furthermore, the compositions show an excellent adhesion on many substrates without pre-treatment, and thus are easy to manufacture due to their low viscosity. The exceptionally high degree of elasticity imparts them excellent impact resistance at low temperatures, even without impact modifiers. Also their close to ideal elastic behavior imparts them an excellent recovery behavior. Their very high elasticity can be maintained even when the formulations are filled with commonly known fillers.

### Examples

In the compositions used in the examples 1 to 5, the abbreviations have the following meanings:
- MMA: = methyl methacrylate
- THFMA: = tetrahydrofuryl methacrylate
- LA: = lauryl acrylate
- PUE: = prepolymer PUA
- p-Tol: = N,N-bis(2-dihydroxyethyl)-p-toluidine
- BPO paste: = a past of 40 % benzoyl peroxide in phthalate plasticizer

The compounds used to formulate the adhesive compositions of examples 1 to 5 and their amounts are listed in Table 1.

### Preparation of Prepolymer PUA

To 800 g of a diol with mw 4000 (e.g. Acclaim 4200 from Bayer), 88.6 g of IPDI (e.g. Vestanat IPDI from Bayer) together with 0.05% of dibutyltin dilaurate (DBTL) are added. The reaction mixture is stirred at 80°C for about 4 hours under nitrogen. Then 64 g of 2- hydroxyethyl methacrylate (HEMA) are added at once, and the mixture is stirred again at 80°C for another 45 minutes. After cooling the NCO value of the reaction product is measured as 0.01.

### Preparation of the adhesive compositions of Examples 1 to 5

Methyl methacrylate, prepolymer PUA, lauryl methacrylate and N,N-bis-(2-hydroxyethyl)-p-toluidine were mixed in a dissolver at 40°C for 15 minutes, until a homogeneous liquid was obtained. Then Aerosil was added and mixed at high revolutions per minute until the material showed thixotropic behavior.

The adhesives were cured by adding 4 % of the BPO paste.

The test results obtained for the cured adhesives are also listed in Table 1.

The adhesives were tested as follows:

### Tensile strength and Elongation at Break (DIN 53504)

The adhesive was cured to form a sheet of approximately 2.5 mm thickness from which tensile test dumbbells were cut. The stress-strain tests were performed using a rate of 200 mm per minute for measurements at room temperature.

### Tensile Shear Strength (TSS) (DIN EN 1465)

Substrates with a dimension of 100 mm x 25 mm and 2 mm thick in case of aluminium and 4 mm thick in case of ABS were cleaned with isopropanol. The bond thickness is 1.5 mm and the overlap 11.5 mm. The tensile shear strength was measured at 10 mm/min.

**Table 1:**

| ***Designation*** | ***Components*** | ***Example 1 [w*/*w%]*** | ***Example 2 [w*/*w%]*** | ***Example 3 [w*/*w%]*** | ***Example 4 [w*/*w%]*** | ***Example 5 [w*/*w%]*** |
|---|---|---|---|---|---|---|
| A | MMA | 40 | 38 | | 20 | |
| A | THFMA | | | 40 | | 70 |
| B | LA | 8 | 10 | 8 | 10 | |
| C | PUA | 40 | 42 | 41 | 60 | 18 |
| | p-Tol | 2 | 2 | 2 | 2 | 2 |
| | Aerosil 200 | 10 | | 9 | 8 | 10 |
| | | | | | | |
| Tensile Strength [MPa] | | 9.5 | 7 | 7.8 | 13 | 9.8 |
| Elongation at Break [%] | | 243 | 224 | 293 | 224 | 140 |
| TSS ALMg3 [MPa] | | 6.4 | n.d. | n.d. | n.d. | n.d. |
| TSS ABS [MPa] | | 4.5 | n.d. | n.d. | n.d. | n.d. |

| | | | | | | |
|---|---|---|---|---|---|---|
| n.d. = not determined | | | | | | |

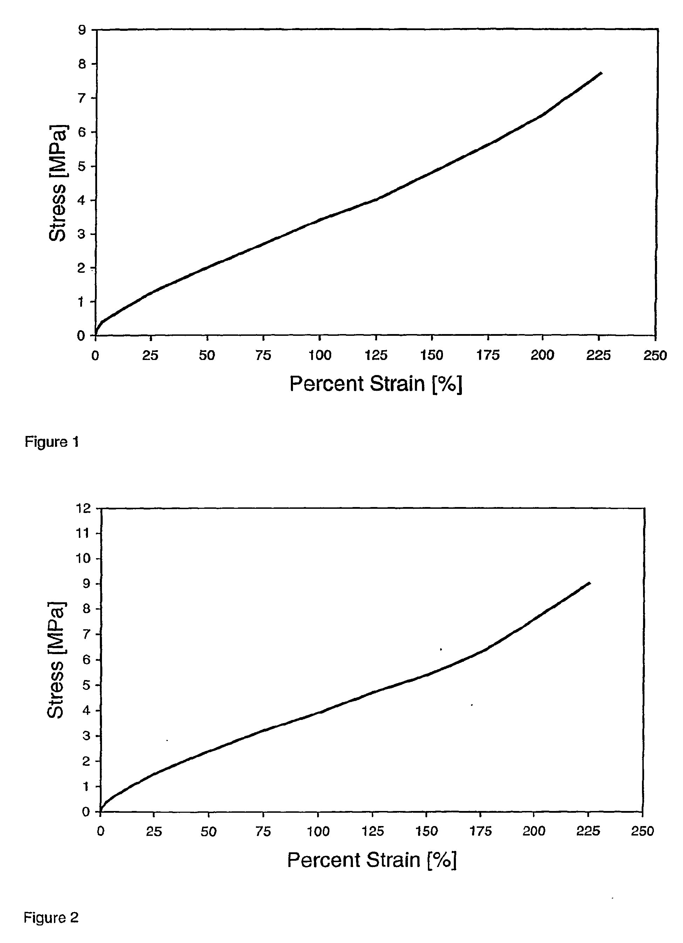

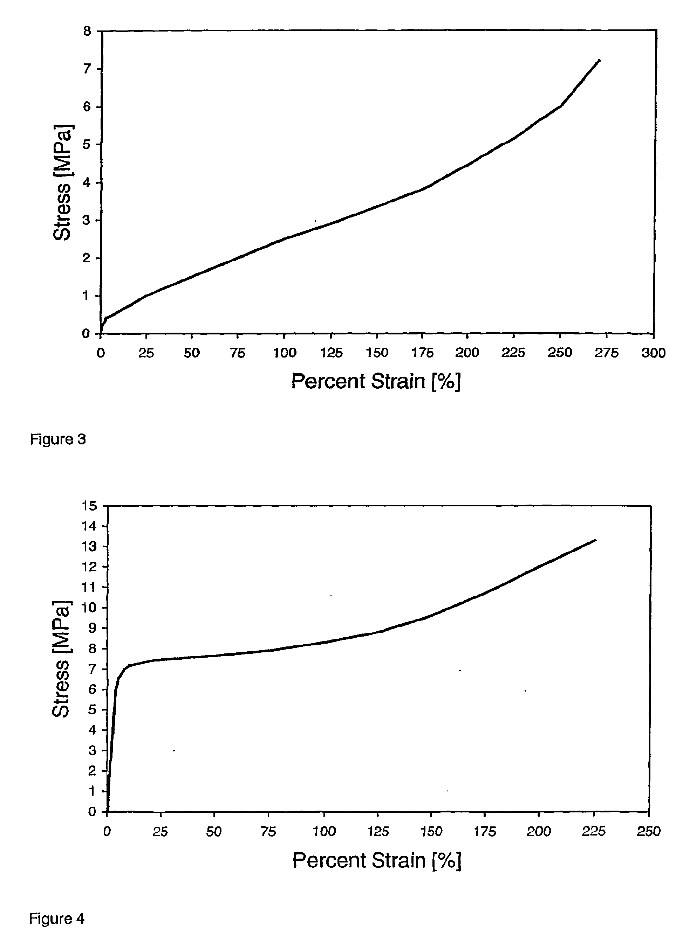

Examples 1 to 4 all have a high tensile strength and a high elongation at break. Only examples 1 to 3 exhibit an elastic behaviour which approaches the ideal Hook law. The stress strain curves shown in Figures 1 to 3 are linear. Example 4 contains a larger amount of liquid elastomer C than is described in the present invention. The composition of example 4 has a stress strain curve which is only linear up to about 5 %. Although this composition has an elongation at break of up to 200%, it does not exhibits an elastic behaviour. Example 5 represents a state of the art composition. The stress strain plot of Example 5 is not linear, and therefore, this adhesive is not elastic.

## Claims

1. An adhesive composition comprising
(a) at least one monofunctional (meth)acrylic monomer A whose homo-polymer or co-polymer exhibit a glass transition temperature (Tg) between 40°C and 140°C,
(b) at least one monofunctional (meth)acrylic monomer B of the following structure (B): 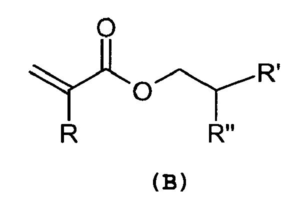 wherein
R is H or CH₃,
R' is H or (CH₂)ₙCH₃, with n = 0 to 2, in particular CH₂CH₃ or H, and
R" is C₃-C₂₀-alkyl or phenoxy or O-(CH₂)ₙ-CH₃, or O-[(CH₂)₂-O]ₙ-CH₂-CH₃ with n = 0 to 2, in particular (CH₂)ₙCH₃ with n = 3 or 10 to 13, and
c) at least one liquid elastomer C in the molecular weight range of 1000 to 9000 with (meth)acrylic derivative groups,
whereby the components A, B, and C are present in the following amounts:
B based on the total weight of A+B+C = 5 to 20 % by weight,
C based on the total weight of A+C = 30 to 70 % by weight.

2. The adhesive composition of claim 1, wherein the at least one monomer A is selected from (meth)acrylic esters, in particular linear or branched or cyclic C₁-C₆-alkyl esters, or heterocyclic or aromatic esters, much preferred the group consisting of methyl methacrylate, tetrahydrofurfuryl methacrylate, cyclohexylmethacrylate, cyclic trimethylolpropane formal acrylate, isobornylmethacrylate, benzylmethacrylate, dicyclopentadienyloxyethylmethacrylate, t-butylmethacrylate, isobornylacrylate, dihydrodicyclopentadienylacrylate (DHDCPA), and mixtures thereof, in particular methyl methacrylate, tetrahydrofurfuryl methacrylate, and mixtures thereof.

3. The adhesive composition of claim 1 or 2, wherein the at least one monomer B is selected from linear or branched C₆-C₁₅-alkyl esters, in particular from the esters wherein
R' is CH₂CH₃ and R" is (CH₂)₃CH₃, or
R' is H and R" is (CH₂)ₙCH₃ with n = 10-13, much preferred n = 10,
or mixtures thereof.

4. The adhesive composition of claim 3 wherein the one or more (meth)acrylate ester(s) are one or more acrylate ester(s), preferably lauryl acrylate, 2-ethyl hexyl acrylate, or mixtures thereof.

5. The adhesive composition of anyone of the preceding claims, wherein the ethylenically unsaturated (meth)acrylic groups of the liquid elastomer C are chosen from the group consisting of
- (meth)acrylic functionalized butadiene, isoprene based polymer or block-copolymer,
- PU-(meth)acrylate obtainable through the syntheses of a polyethylene polyol or polypropylene polyol, a diisocyanate and a hydroxy functionalyzed ethylenically unsaturated monomer.

6. The adhesive composition of claim 5, wherein the PU-(meth)acrylate is obtainable through a synthesis using polyols with low unsaturation and narrow molecular weight distribution as obtainable through double metal cyanide complex catalysis.

7. The adhesive composition of anyone of the preceding claims, wherein the amount of B based on the total weight of A+B+C = 5 to 12 % by weight.

8. The adhesive composition of anyone of the preceding claims, wherein the amount of C based on the total weight of A+C = 40 to 60 % by weight.

9. The adhesive composition of anyone of the preceding claims that furthermore contains at least one initiator, preferably an organic peroxide and/or at least one catalyst, preferably selected from the group consisting of tertiary amines and salts of transition metals and complexes of transition metals.

10. The adhesive composition of claim 9 wherein the initiator is benzoylperoxide, and/or the tertiary amine is selected from the group consisting of N,N-dimethylaniline, N,N-dimethyl-p-toluidine, N,N-diethylaniline, N,N-diethyltoluidine, N,N-bis(2-hydroxyethyl)-p-toluidine, N-ethoxylated p-toluidine, N-alkylmorpholine or mixtures thereof, or the salts and complexes of transition metals are selected from the group consisting of salts and complexes of cobalt, nickel, copper and mixtures thereof.

11. The adhesive composition of anyone of the preceding claims that contains at least one further compound, in particular a filler or thixotropic agent.

12. Use of an adhesive composition of anyone of claims 1 to 11 for bonding applications with materials having different thermal expansion coefficients, in particular for bonding applications in motor vehicles including trucks, and in rail cars, e.g. for bonding of side panels of trailers or direct glazing.

13. A method for bonding materials having different thermal expansion coefficients, wherein said bonding is performed by application of an adhesive composition of anyone of claims 1 to 11 between said materials.

## Patentansprüche

1. Klebstoffzusammensetzung, umfassend
(a) mindestens ein monofunktionelles (Meth)acrylmonomer A, dessen Homopolymer oder Copolymer eine Glasübergangstemperatur (Tg) zwischen 40°C und 140°C zeigt;
(b) mindestens ein monofunktionelles (Meth)acrylmonomer B der folgenden Struktur (B): 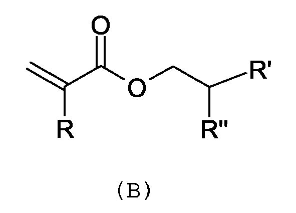 worin
R H oder CH₃ ist,
R' H oder (CH₂)ₙCH₃ ist, wobei n = 0 bis 2, insbesondere CH₂CH₃ oder H, und
R'' C₃-C₂₀-Alkyl oder Phenoxy oder O-(CH₂)ₙ-CH₃, oder O-([(CH₂)₂-O]ₙ-CH₂-CH₃, mit n = 0 bis 2, ist, insbesondere (CH₂)ₙCH₃, mit n = 3 oder 10 bis 13, und
(c) mindestens ein flüssiges Elastomer C im Molekulargewichtsbereich von 1000 bis 9000 mit (Meth)acrylderivatgruppen,
wobei die Komponenten A, B und C in den folgenden Mengen vorliegen:
B = 5 bis 20 Gew.-%, bezogen auf das Gesamtgewicht von A+B+C
C = 30 bis 70 Gew.-%, bezogen auf das Gesamtgewicht von A+C

2. Klebstoffzusammensetzung nach Anspruch 1, wobei das mindestens eine Monomer A gewählt ist aus (Meth)-acrylsäureestern, insbesondere linearen oder verzweigten oder cyclischen C₁-C₆-Alkylestern, oder heterocyclischen oder aromatischen Estern, mehr bevorzugt aus der Gruppe bestehend aus Methylmethacrylat, Tetrahydrofurfurylmethacrylat, Cyclohexylmethacrylat, cyclischem Trimethylolpropanformalacrylat, Isobornylmethacrylat, Benzylmethacrylat, Dicyclopentadienyloxyethylmethacrylat, t-Butylmethacrylat, Isobornylacrylat, Dihydrodicyclopentadienylacrylat (DHDCPA) und Mischungen davon, insbesondere Methylmethacrylat, Tetrahydrofurfurylmethacrylat und Mischungen davon.

3. Klebstoffzusammensetzung nach Anspruch 1 oder 2, wobei das mindestens eine Monomer B ausgewählt ist aus linearen oder verzweigten C₆-C₁₅-Alkylestern, insbesondere aus den Estern, bei welchen
R' CH₂CH₃ ist und R'' (CH₂)₃CH₃ ist, oder
R' H ist und R'' (CH₂)ₙCH₃ ist, wobei n = 10 - 13, mehr bevorzugt n = 10 ist;
oder Mischungen davon.

4. Klebstoffzusammensetzung nach Anspruch 3, wobei der eine oder die mehreren (Meth)acrylatester ein oder mehrere Acrylatester ist/sind, vorzugsweise Laurylacrylat, 2-Ethylhexylacrylat oder Mischungen davon.

5. Klebstoffzusammensetzung nach mindestens einem der vorhergehenden Ansprüche, wobei die ethylenisch ungesättigten (Meth)acrylsäuregruppen des flüssigen Elastomers C ausgewählt sind aus der Gruppe bestehend aus
- (Meth)acrylsäure-funktionalisiertem Butadien, Isopren-basiertem Polymer oder Blockcopolymer,
- PU-(Meth)acrylat, erhältlich durch die Synthese eines Polyethylenpolyols oder Polypropylenpolyols, eines Diisocyanats und eines Hydroxy-funktionalisierten, ethylenisch ungesättigten Monomers.

6. Klebstoffzusammensetzung nach Anspruch 5, wobei das PU-(Meth)acrylat erhältlich ist durch eine Synthese unter Verwendung von Polyolen mit einer geringen Ungesättigtheit und einer engen Molekulargewichtsverteilung, wie sie durch eine Doppelmetall-Cyanidkomplex-Katalyse erhältlich sind.

7. Klebstoffzusammensetzung nach mindestens einem der vorhergehenden Ansprüche, wobei die Menge von B = 5 bis 12 Gew.-%, bezogen auf das Gesamtgewicht von A+B+C, ist.

8. Klebstoffzusammensetzung nach mindestens einem der vorhergehenden Ansprüche, wobei die Menge von C = 40 bis 60 Gew.-%, bezogen auf das Gesamtgewicht von A+C, ist.

9. Klebstoffzusammensetzung nach mindestens einem der vorhergehenden Ansprüche, welche darüber hinaus mindestens einen Initiator, vorzugsweise ein organisches Peroxid und/oder mindestens einen Katalysator, vorzugsweise ausgewählt aus der Gruppe bestehend aus tertiären Aminen und Salzen von Übergangsmetallen und Komplexen von Übergangsmetallen, enthält.

10. Klebstoffzusammensetzung nach Anspruch 9, wobei der Initiator Benzoylperoxid ist und/oder das tertiäre Amin ausgewählt ist aus der Gruppe bestehend aus N,N-Dimethylanilin, N,N-Dimethyl-p-toluidin, N,N-Diethylanilin, N,N-Diethyltoluidin, N,N-Bis(2-hydroxyethyl)-p-toluidin, N-ethoxyiertem p-Toluidin, N-Alkylmorpholin oder Mischungen davon, oder die Salze und Komplexe von Übergangsmetallen ausgewählt sind aus der Gruppe bestehend aus Salzen und Komplexen von Kobalt, Nickel, Kupfer und Mischungen davon.

11. Klebstoffzusammensetzung nach mindestens einem der vorhergehenden Ansprüche, welche mindestens eine weitere Verbindung enthält, insbesondere einen Füllstoff oder ein Thixotropiermittel.

12. Verwendung einer Klebstoffzusammensetzung nach mindestens einem der Ansprüche 1 bis 11 für Verklebungsanwendungen mit Materialien mit unterschiedlichen Wärmeausdehnungskoeffizienten, insbesondere für Verklebungsanwendungen bei Kraftfahrzeugen, einschließlich Lastkraftwagen, und bei Eisenbahnwaggons, z. B. zum Verkleben von Seitenverkleidungen von Anhängern oder direkter Verglasung.

13. Verfahren zum Verkleben von Materialien mit unterschiedlichen Wärmeausdehnungskoeffizienten, wobei das Verkleben durch die Aufbringung einer Klebstoffzusammensetzung nach mindestens einem der Ansprüche 1 bis 11 zwischen den Materialien erfolgt.

## Revendications

1. Composition adhésive comprenant :
(a) au moins un monomère (méth)acrylique monofonctionnel A dont l'homopolymère ou le copolymère possède une température de transition vitreuse (Tg) comprise entre 40 °C et 140 °C,
(b) au moins un monomère (méth)acrylique monofonctionnel B de la structure suivante (B) : 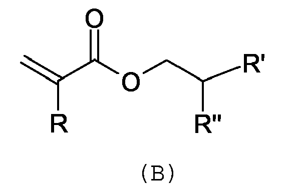 dans laquelle
R représente H ou un groupe CH₃,
R' représente un atome H ou un groupe (CH₂)ₙCH₃, où n = 0 à 2, en particulier un groupe CH₂CH₃ ou H, et
R'' représente un groupe alkyle en C₃ à C₂₀ ou phénoxy ou O-(CH₂)ₙ-CH₃, ou un groupe O-[(CH₂)₂-O]ₙ-CH₂-CH₃ où n = 0 à 2, en particulier un groupe (CH₂)ₙCH₃ où n = 3 ou 10 à 13, et
(c) au moins un élastomère liquide C dont le poids moléculaire se situe dans la plage allant de 1000 à 9000 avec des groupes de dérivés (méth)acryliques,
où les composants A, B et C sont présents dans les quantités suivantes :
B, sur la base du poids total de A + B + C, est égal à 5 à 20 % en poids,
C, sur la base du poids total de A + C, est égal à 30 à 70 % en poids.

2. Composition adhésive selon la revendication 1, dans laquelle ledit au moins un monomère A est choisi parmi des esters (méth)acryliques, en particulier des esters d'alkyle en C₁ à C₆ linéaires, ramifiés ou cycliques, ou des esters hétérocycliques ou aromatiques, de préférence le groupe constitué par le méthacrylate de méthyle, le méthacrylate de tétrahydrofurfuryle, le cyclohéxylméthacrylate, l'acrylate formal de triméthylolpropane cyclique, l'isobornylméthacrylate, le benzylméthacrylate, le dicyclopentadiényloxyéthylméthacrylate, le t-butylméthacrylate, l'isobornylacrylate, le dihydrodicyclopentadiénylacrylate (DHDCPA) et des mélanges de ceux-ci, en particulier le méthacrylate de méthyle et le méthacrylate de tétrahydrofurfuryle, et des mélanges de ceux-ci.

3. Composition adhésive selon la revendication 1 ou 2, dans laquelle au moins un monomère B est choisi parmi des esters d'alkyle en C₆ à C₁₅ linéaires ou ramifiés, en particulier des esters dans lesquels
R' représente un groupe CH₂CH₃ et R'' représente un groupe (CH₂)₃CH₃, ou
R' représente un atome H et R'' représente un groupe (CH₂)ₙCH₃ où n = 10 à 13, de préférence où n = 10, ou des mélanges de ceux-ci.

4. Composition adhésive selon la revendication 3, dans laquelle lesdits un ou plusieurs ester(s) de méthacrylate sont un ou plusieurs ester(s) d'acrylate, de préférence de l'acrylate de lauryle, de l'acrylate de 2-éthylhexyle, ou des mélanges de ceux-ci.

5. Composition adhésive selon l'une quelconque des revendications précédentes, dans laquelle les groupes (méth)acryliques éthyléniquement insaturés de l'élastomère liquide C sont choisis parmi le groupe constitué par
- du butadiène fonctionnalisé par un groupe (méth)acrylique, un polymère ou un copolymère séquencé à base d'isoprène,
- du PU-(méth)acrylate qu'on peut obtenir par la synthèse d'un polyol de polyéthylène ou d'un polyol de polypropylène, un diisocyanate et un monomère éthyléniquement insaturé fonctionnalisé par un groupe hydroxyle.

6. Composition adhésive selon la revendication 5, dans laquelle le PU-(méth)acrylate peut être obtenu par une synthèse faisant appel à des polyols avec une faible insaturation et une distribution étroite du poids moléculaire qu'on peut obtenir par une catalyse d'un complexe de cyanure bimétallique.

7. Composition adhésive selon l'une quelconque des revendications précédentes, dans laquelle la quantité de B sur la base du poids total de A + B + C est égale à 5 à 12 % en poids.

8. Composition adhésive selon l'une quelconque des revendications précédentes, dans laquelle la quantité de C sur la base du poids total de A + C est égale à 40 à 60 % en poids.

9. Composition adhésive selon l'une quelconque des revendications précédentes, qui comprend en outre au moins un initiateur, de préférence un peroxyde organique et/ou au moins un catalyseur, de préférence choisi parmi le groupe constitué par des amines tertiaires, des sels de métaux de transition et des complexes de métaux de transition.

10. Composition adhésive selon la revendication 9, dans laquelle l'initiateur est du peroxyde de benzoyle, et/ou l'amine tertiaire est choisie parmi le groupe constitué de la N,N-diméthylaniline, de la N,N-diméthyl-p-toluidine, de la N,N-diéthylaniline, de la N,N-diéthyltoluidine, de la N,N,-bis(2-hydroxyéthyl)-p-toluidine, de la p-toluidine N-éthoxylée, de la N-alkylmorpholine et des mélanges de celles-ci, ou des sels et des complexes de métaux de transition sont choisis parmi le groupe constitué de sels et de complexes de cobalt, de nickel, de cuivre et des mélanges de ceux-ci.

11. Composition adhésive selon l'une quelconque des revendications précédentes, qui comprend au moins un autre composé, en particulier une charge ou un agent thixotrope.

12. Utilisation d'une composition adhésive selon l'une quelconque des revendications 1 à 11, pour des applications de collage avec des matériaux ayant des coefficients d'expansion thermique différents, en particulier pour des applications de collage dans des véhicules à moteur, y compris des camions, et dans des véhicules ferroviaires, par ex., pour le collage de panneaux latéraux de remorques ou pour un enduisage direct.

13. Procédé de collage de matériaux ayant différents coefficients d'expansion thermique, dans lequel ledit collage est effectué par l'application entre lesdits matériaux d'une composition adhésive selon l'une quelconque des revendications 1 à 11.
